# NOUVEAU FASCICULE DE BREVET EUROPEEN

(11) **EP 1 520 111 B2**
(45) Date de publication et mention de la décision concernant l'opposition: **25.03.2009**
(45) Mention de la délivrance du brevet: 11.01.2006
(21) Numéro de dépôt: 03752686.0
(22) Date de dépôt: 08.05.2003
(51) Int. Cl.: F16C 33/32

(54) **ROULEMENT**
WÄLZLAGER
BALL BEARING

(30) Priorité: 15.05.2002 CH 813022002
(43) Date de publication de la demande: 06.04.2005
(73) Titulaire: MPS Micro Precision Systems AG, 2504 Biel/Bienne (CH)
(72) Inventeur: PARIETTI, Patrice, CH-2560 Nidau (CH); LAAGER, Alain, CH-2603 Péry (CH)
(74) Mandataire: Nithardt, Roland
(86) Numéro de dépôt international: PCT/CH2003/000297
(87) Numéro de publication internationale: WO 2003/098063

(56) Documents cités:
- EP-A- 0 807 762
- FR-B- 1 151 473
- US-A- 4 966 552
- US-A- 5 203 228
- US-A1- 2002 013 211
- US-B1- 6 174 089
- US-B1- 6 217 221
- PATENT ABSTRACTS OF JAPAN vol. 2000, no. 25, 12 avril 2001 (2001-04-12) & JP 2001 233671 A (TOSHIBA CORP), 28 août 2001 (2001-08-28)
- PATENT ABSTRACTS OF JAPAN vol. 2000, no. 25, 12 avril 2001 (2001-04-12) & JP 2001 214937 A (TOSHIBA CORP), 10 août 2001 (2001-08-10)

## Description

La présente invention concerne un roulement pour applications subminiatures, notamment dans le domaine de l'horlogerie, comportant un nombre prédéterminé de corps roulants maintenus dans une cage et disposés entre une bague extérieure et deux bagues intérieures fixées entre elles, ladite cage et lesdites bagues étant réalisées en acier ou similaire.

L'art antérieur connaît l'utilisation d'oxyde zirconium dans les roulements, notamment par la publication US 2002/013211, la publication européenne EP 0 807 762 et les abrégés JP 2001 233671 et 2001 214937.

La publication US 2002/013211 concerne un élément résistant à l'usure comportant un corps en oxyde de zirconium fritté et destiné particulièrement à équiper les entraînements d'appareils électroniques tels que les lecteurs de disques durs ou de disquettes, les lecteurs de CD ou de DVD ou autres appareils requérant une vitesse de rotation élevée. L'utilisation d'oxyde de zirconium permet en particulier d'obtenir une grande stabilité de cette vitesse en éliminant l'électricité statique générée par l'appareil.

Les billes de roulements objets des demandes JP 2001 233671 et 2001 214937 réalisées en oxyde de zirconium sont également destinées à éliminer les inconvénients provoqués par l'électricité statique dans les équipements électroniques.

Les roulements décrits dans la publication EP 0 807 762 sont des roulements hybrides comportant soit un chemin de roulement, soit des billes en oxyde de zirconium. Ce type de roulement est particulièrement destiné aux roulements utilisés dans des conditions de fonctionnement particulières, telles que dans un environnement corrosif, à température élevée, dans les installations sous vide, etc..

Toutes ces formes de roulements concernent des roulements qui sont lubrifiés. Cependant, dans certaines applications, il s'avère qu'il est préférable de ne pas être obligé de lubrifier de tels roulements. Un roulement non lubrifié a un meilleur rendement. En effet dans un roulement lubrifié, l'huile, par la formation d'une vague, se comporte comme un frein au roulage des corps roulants.

En particulier, dans le domaine de l'horlogerie, depuis longtemps, la lubrification des mobiles du mouvement de la montre analogique est une grande préoccupation des horlogers. Malgré l'évolution technique des lubrifiants, le vieillissement des huiles est une des principales causes de dysfonctionnement du mécanisme dans le temps. Avec le temps, l'huile de lubrification se transforme en cambouis qui altère le niveau et la régularité du rendement du roulement. À l'extrême, le cambouis peut se détacher des gorges de circulation du roulement et causer des dégâts importants au mouvement provoquant l'arrêt de la montre. En outre, la manipulation des composants de la montre lors du montage en présence d'un corps gras aboutit à une pollution des outils de montage.

Dans le cas du roulement à billes de masse oscillante, les techniques de lubrification et la quantité d'huile introduite dans le palier peuvent varier sensiblement d'un horloger à l'autre et avoir une incidence directe sur les performances du mécanisme de remontage d'une montre analogique.

L'invention a donc pour objet de pallier tous ces inconvénients en proposant un roulement pour des applications subminiatures qui est utilisable sans aucune lubrification.

Ce but est atteint par un roulement tel que défini en préambule et caractérisé en ce que lesdits corps roulants sont réalisés en une céramique d'oxyde de zirconium agencée pour supprimer la lubrification dudit roulement, et ce que chaque corps roulant comporte trois ou quatre points de contact avec lesdites bagues.

La présente invention offre une solution à toutes les applications qui demandent une durée de stockage très longue qui ne peut pas être garantie avec des systèmes lubrifiés, soumis à des chocs importants allant jusqu'à 5000g et/ou à des hautes températures.

Le roulement de masse oscillante d'une montre mécanique est aussi exposé à des chocs violents. Pour tester sa résistance aux chocs, les montres sont soumises au redoutable test dit "du mouton pendule" qui simule un choc de 5000g appliqué sur la montre à des endroits définis par la norme. Un essai de remontage automatique est ensuite effectué afin de connaître les effets du test.

Des tests dans l'application effectués sur une année ont permis de mettre en évidence la stabilité des performances de remontage de la montre automatique dans la durée alors que le roulement traditionnel les voit baisser avec le temps.

Les spécifications susmentionnées sont atteintes par un système équipé d'éléments roulants dont le matériau possède un module d'élasticité et un coefficient de dilatation proches de ceux de l'acier.

Utiliser un roulement sans lubrification en conservant les matériaux traditionnels (acier) n'est pas envisageable à cause du phénomène de micro-soudure provoqué dans le temps par un contact permanent acier sur acier sous charge. Il se produit alors rapidement une détérioration de la surface des corps en contact (bague et billes) qui diminue sensiblement la durée de vie du roulement. L'huile est une barrière à ce phénomène et sa nature ainsi que son dosage peuvent fortement influencer la durée de vie.

La présente invention répond à toutes les spécifications susmentionnées par l'utilisation pour les billes d'un matériau dur, non métallique et résistant aux chocs.

Le matériau des billes est une céramique en oxyde de zirconium (ZrO2) qui en plus d'une dureté élevée (12OOHV) a la propriété d'avoir un module d'élasticité (220000 Mpa) proche de celui de l'acier (210000 Mpa).

De plus, le coefficient de dilatation du ZrO2 (11.10-6.K-1) est également proche de celui de d'acier (11.5.10-6.K-1). Ainsi, les variations de températures n'influencent pas les spécifications de jeu de fonctionnement déterminées à l'air ambiant.

Les caractéristiques de l'oxyde de zirconium utilisé dans la présente invention sont:

| | |
|---|---|
| densité: | 6,0 g/cm3 |
| dureté: | 1150-1200 H |
| module d'élasticité: | 220000 Mpa |
| coefficient linéaire de l'expansion thermale: | 11x10-6*K-1 |
| ténacité à la rupture: | 10 Mpa*m^1/2 |
| résistance à la flexion: | >1800 Mpa |

L'invention va être décrite maintenant avec la description d'un mode de réalisation d'une application horlogère et plus spécifiquement pour la fonction de remontage automatique assurée par le rotor. Le rotor est composé de la masse oscillante et d'un roulement à billes à quatre points de contact.

L'invention revendique le choix des matériaux avec le placement d'une céramique appropriée entre deux éléments métalliques permettant d'assurer l'emploi sans lubrifiant du roulement en conservant les mêmes caractéristiques que celles du roulement lubrifié ou en les améliorant.

L'invention revendique une extension très importante de la durée de vie et notamment du temps de stockage sans altération.

L'invention s'applique principalement aux roulements à trois ou quatre points de contact de petites dimensions, mais étend ses revendications à tous les systèmes comprenant un élément mobile guidé par des éléments sur lesquels il roule.

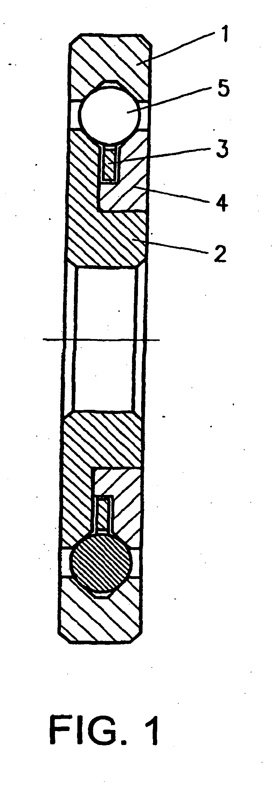

La construction standard d'un roulement à quatre points de contact est décrite ci-dessous en relation avec l'unique dessin de la figure 1 montrant une coupe à travers un roulement avec des corps roulants suivant l'invention.

Le roulement à trois ou quatre points de contact est composé, en général, d'une bague extérieure 1, de deux bagues intérieures 2 et 4, d'un nombre de corps roulants variable 5 et, afin de maintenir les corps roulants espacés l'un de l'autre, une cage 3 est positionnée entre eux.

L'assemblage d'un roulement à trois ou quatre points de contact se fait en positionnant les corps roulants 5 et la cage 3 dans la bague extérieure 1 et la bague intérieure 2 ou 4. La bague intérieure restante est ajustée ensuite fermant le roulement. Le jeu de fonctionnement est fixé par la dimension des bagues ou par positionnement variable des bagues intérieures 2 et 4. La fixation des deux bagues intérieures 2 et 4 peut se faire par chassage, soudage laser, sertissage, collage ou tout autre moyen de fixation.

Les bagues intérieures 2 et 4 et extérieure 1 peuvent être fabriquées au choix en acier au chrome, acier inoxydable, en titarium, en céramiques ou en alliage de bronze.

La cage 3 qui permet de maintenir les corps roulants 5 espacés peut être fabriquée en acier inoxydable, en acier au chrome, en alliage de cuivre ou en matière plastique. La cage 3 n'est pas toujours insérée dans le roulement. Par exemple, dans le cas d'une grand charge axiale ou radiale, le roulement peut être complètement rempli de corps roulants 5.

Les corps roulants 5 qui font ici l'objet de la présente invention sont des billes de forme sphérique. Il est néanmoins évident que des corps roulants de forme différente comme des cylindres ou troncs de cône font partie de la présente invention.

Les durées de vie ainsi que les performances des roulements à trois ou quatre points de contact ont été testées avec des corps roulants 5 de forme sphérique. Les corps roulants 5 sont en oxyde de zirconium et possèdent avantageusement une densité entre 5,5 et 6,5 g/cm3, une dureté entre 1100-1250 HV, un module d'élasticité entre 210000 et 230000 Mpa, un coefficient linéaire de l'expansion thermale entre 10 à 12x10-6*K-1, une ténacité à la rupture de 9 à 11 Mpa*m^1/2 et une résistance à la flexion >1800 Mpa.

Les corps roulants 5 de la présente invention sont plus particulièrement en oxyde de zirconium avec les caractéristiques suivantes: densité 6,0 g/cm3, dureté 1150-1200 HV, module d'élasticité 220000 Mpa, coefficient linéaire de l'expansion thermale 11x10-6*K-1, ténacité à la rupture 10 Mpa*m^1/2, résistance à la flexion >1800 Mpa.

Un roulement équipé de billes en oxyde de zirconium n'a pas besoin de lubrifiant ce qui prolonge sa durée de vie, facilite son entretien, rend la stérilisation possible et améliore son rendement.

La présente invention s'applique également à tout microroulement hybride à trois ou quatre points de contact non lubrifié et à tous les éléments mobiles (tournants ou linéaires ou autres) supportés par des éléments roulants sur lesquels ledit élément mobile roule.

## Revendications

1. Roulement pour applications subminiatures, dans le domaine de l'horlogerie, comportant un nombre prédéterminé de corps roulants (5) maintenus dans une cage (3) et disposés entre une bague extérieure (1) et deux bagues intérieures (2, 4) fixées entre elles, ladite cage (3) et lesdites bagues (1, 2, 4) étant réalisées en acier ou similaire, **caractérisé en ce que** lesdits corps roulants (5) sont réalisés en une céramique d'oxyde de zirconium agencée pour supprimer la lubrification dudit roulement, et **en ce que** chaque corps roulant (5) comporte trois ou quatre points de contact avec lesdites bagues (1, 2, 4).

2. Roulement selon la revendication 1, **caractérisé en ce** la densité de la céramique d'oxyde de zirconium est comprise entre 5,5 et 6,5 g/cm3 et de préférence égale à 6,0 g/cm³.

3. Roulement selon les revendications 1 et 2, **caractérisé en ce que** la dureté de la céramique d'oxyde de zirconium est comprise entre 1100-1250 HV et de préférence comprise entre 1150-1200 HV.

4. Roulement selon les revendications 1 à 3, **caractérisé en ce que** la ténacité a la rupture de la céramique d'oxyde de zirconium est comprise entre 9 à 11 Mpa * m^1/2 et de préférence égale à 10 Mpa * m^1/2.

5. Roulement selon les revendications 1 à 4, **caractérisé en ce que** le coefficient linéaire de l'expansion thermale de la céramique d'oxyde de zirconium est compris entre 10 à 12x10-6 * K-1 et de préférence égal à 11x10-6 * K-1.

6. Roulement selon les revendications 1 à 5, **caractérisé en ce que** le module d'élasticité de la céramique d'oxyde de zirconium est compris entre 210000 et 230000 Mpa et de préférence égal à 220000 Mpa.

7. Roulement selon les revendications 1 à 6, **caractérisé en ce que** la résistance à la flexion de la céramique d'oxyde de zirconium est supérieure à 1800 Mpa.

8. Roulement selon tes revendications 1 à 7, **caractérisé en ce que** les corps roulants (5) sont des billes de forme sphérique des cylindres ou des troncs de cône.

## Claims

1. Rolling bearing for sub-miniature applications in the clock making industry, comprising a predetermined number of rolling elements (5) kept together in a retainer (3) and arranged between an outer ring (1) and two inner rings (2, 4) attached to each other, the said retainer (3) and the said rings (1, 2, 4) being made of steel or similar, **characterized in that** the said rolling elements (5) are made of a zirconium oxide ceramic fitted to suppress the lubrication of the said rolling bearing, and **in that** each rolling element (5) comprises three or four points of contact with the said rings (1, 2, 4).

2. Rolling bearing according to claim 1, **characterized in that** the density of the zirconium oxide ceramic is between 5.5 g/cm³ and 6.5 g/cm³ and preferably equal to 6.0 g/cm³.

3. Rolling bearing according to claims 1 and 2, **characterized in that** the hardness of the zirconium oxide ceramic is between 1100 HV and 1250 HV and preferably between 1150 HV and 1200 HV.

4. Rolling bearing according to claims 1 to 3, **characterized in that** the fracture toughness of the zirconium oxide ceramic is between 9 and 11 Mpa*m^1/2 and preferably equal to 10 Mpa*m^1/2.

5. Rolling bearing according to claims 1 to 4, **characterized in that** the linear thermal expansion coefficient of the zirconium oxide ceramic is between 10 and 12x10-6*K-1 and preferably equal to 11x10-6*K-1.

6. Rolling bearing according to claims 1 to 5, **characterized in that** the modulus of elasticity of the zirconium oxide ceramic is between 210000 Mpa and 230000 Mpa and preferably equal to 220000 Mpa.

7. Rolling bearing according to claims 1 to 6, **characterized in that** the transverse strength of the zirconium oxide ceramic is greater than 1800 Mpa.

8. Rolling bearing according to claims 1 to 7, **characterized in that** the rolling elements (5) are spherical shaped balls, cylinders or truncated cones.

## Patentansprüche

1. Wälzlager für Subminiatur-Anwendungen auf dem Gebiet des Uhrenbaus, umfassend eine vorbestimmte Anzahl von Wälzkörpern (5), die in einem Käfig (3) gehalten und zwischen einem Außenring (1) und zwei aneinander befestigten Innenringen (2, 4) angeordnet sind, wobei der Käfig (3) und die Ringe (1, 2, 4) aus Stahl oder ähnlichem gefertigt sind, **dadurch gekennzeichnet, dass** die Wälzkörper (5) aus einer Zirkoniumoxidkeramik gefertigt sind, die eingesetzt wird, damit keine Schmierung des Wälzlagers erforderlich ist, und dass jeder Wälzkörper (5) drei oder vier Kontaktstellen mit den Ringen (1, 2, 4) aufweist.

2. Wälzlager nach Anspruch 1, **dadurch gekennzeichnet, dass** die Dichte der Zirkoniumoxidkeramik zwischen 5,5 und 6,5 g/cm³ liegt und vorzugsweise gleich 6,0 g/cm³ beträgt.

3. Wälzlager nach den Ansprüchen 1 und 2, **dadurch gekennzeichnet, dass** die Härte der Zirkoniumoxidkeramik zwischen 1100 und 1250 HV und vorzugsweise zwischen 1150 und 1200 HV liegt.

4. Wälzlager nach den Ansprüchen 1 bis 3, **dadurch gekennzeichnet, dass** die Bruchzähigkeit der Zirkoniumoxidkeramik zwischen 9 und 11 Mpa*m^1/2 liegt und vorzugsweise gleich 10 Mpa*m^1/2 beträgt.

5. Wälzlager nach den Ansprüchen 1 bis 4, **dadurch gekennzeichnet, dass** der lineare Koeffizient der thermalen Ausdehnung der Zirkoniumoxidkeramik zwischen 10 und 12x10-6*K-1 liegt und vorzugsweise gleich 11x10-6*K-1 beträgt.

6. Wälzlager nach den Ansprüchen 1 bis 5, **dadurch gekennzeichnet, dass** das Elastizitätsmodul der Zirkoniumoxidkeramik zwischen 210000 und 230000 Mpa liegt und vorzugsweise gleich 220000 Mpa beträgt.

7. Wälzlager nach den Ansprüchen 1 bis 6, **dadurch gekennzeichnet, dass** die Biegefestigkeit der Zirkoniumoxidkeramik über 1800 Mpa liegt.

8. Wälzlager nach den Ansprüchen 1 bis 7, **dadurch gekennzeichnet, dass** die Wälzkörper (5) Kugeln sphärischer Form, Zylinder oder Kegelstümpfe sind.
